Europäisches Patentamt

European Patent Office

Office européen des brevets

(19)

(11) Veröffentlichungsnummer: **0 000 160**
**B1**

(12)

# EUROPÄISCHE PATENTSCHRIFT

(21) Anmeldenummer: **78100178.9**

(22) Anmeldetag: **16.06.78**

(51) Int. Cl.³: **A 23 K  1/20  C 08 L  61/24**

(54) **Verfahren zur Herstellung von Presslingen aus mehlförmigen Futtermitteln**

(30) Priorität: **02.07.77 DE 2729917**

(43) Veröffentlichungstag der Anmeldung:
**10.01.79 Patentblatt 79/01**

(45) Bekanntmachung des Hinweises auf die Patenterteilung:
**26.11.80 Patentblatt 80/24**

(84) Benannte Vertragsstaaten:
**BE CH DE FR GB NL SE**

(56) Entgegenhaltungen:
**US - A - 2 652 377**
**US - A - 2 687 354**
**US - A - 3 873 733**
**US - A - 3 989 846**
**Chemical Abstracts, Vol. 73, 1970, col. 44122c**
**"Feed for ruminents"**

(73) Patentinhaber: **BASF Aktiengesellschaft**
**Carl-Bosch-Strasse 38**
**D - 6700 Ludwigshafen (DE)**

(72) Erfinder: **Tiefenbacher, Hubert, Dr.**
**Rene-Bohn-Strasse 4**
**D - 6700 Ludwigshafen (DE)**
**Kraus, Friedrich, Dr.**
**L 11, 20-22**
**D - 6800 Mannheim 1 (DE)**
**Matthias, Guenther, Dr.**
**Meergartenweg 25a**
**D - 6710 Frankenthal (DE)**

## Verfahren zur Herstellung von Presslingen aus mehlförmigen Futtermitteln

Die Erfindung betrifft ein Verfahren zur Herstellung von Futterpellets, d.s. Strangpreßlinge, durch homogenes Vermischen der Futtermittel mit 0,1 bis 2 Gewichtsprozent eines pulverförmigen Harnstoff-Formaldehydharzes und anschließendes Verpressen.

Die Herstellung von Pellets, d.s. zylindrische Stränge oder Stränge mit andersgeformten Querschnitten, von z.B. 1 bis 20 mm und z.B. 2 bis 50 mm Länge und Briketts aus mehligen Futtermitteln insbesondere Mischfutter ist eine verbreitete Methode um dem Futtermittel vorteilhafte Eigenschaften zu erteilen, wie Verhinderung der Entmischung der Komponenten, geringere Lager- und Transportkosten durch höhere Dichte, bessere Dosierung wegen der guten Rieselfähigkeit und damit besondere Eignung bei nicht manueller Fütterungsweise, geringere Futterverluste, geringere Empfindlichkeit gegen Veränderungen durch Luft und Licht wegen der geringeren spezifischen Oberfläche sowie bessere Ausnutzung des Futters durch das Tier infolge chemischer Veränderung (Aufschluß) des Futters beim Pressen.

Das Herstellen der Pellets oder Preßlinge ist jedoch ein komplizierter technischer Vorgang und die dabei auftretenden Probleme sind noch nicht befriedigend gelöst. Man muß nämlich folgende Parameter beim Pressen vermeiden:
— Hohe Temperatur, die Nährstoffe und Vitamine schädigt. Hohe Temperatur entsteht jedoch durch die notwendige Dampfzugabe zum Mischfutter vor dem Pressen und durch die Reibungswärme beim Pressen durch die Matrizen;
— Zu hoher Energieaufwand beim Pressen, da zu harte Preßlinge nicht gefressen werden. Außerdem tritt hoher Matrizenverschleiß, ein;
— Staubbildung (Umweltbelästigung, technischer Aufwand zum Entfernen des Staubes aus den Arbeitsräumen);
— Futtermittelverluste
— zu leichter Abrieb des Preßlings, bewirkt durch zu niedrigen Energieaufwand und durch zu geringe Verdichtung beim Pressen;
— Zu schlechte Bindung der Partikel, besonders bei groben Rohstoffen und bei hohem Fettgehalt, daher Brökeln des Preßlings.

Diese Nachteile und Probleme, die in sehr unterschiedlichem Ausmaß auftreten, sind sehr schwierig zu lösen. Der Erfolg ist von einer Menge bekannter und unbekannter nicht immer zu erkennender Größen abhängig. Man versucht, diese Probleme auf verschiedene Weisen zu beeinflussen. Dies geschieht zum Teil apparativ, d.h. durch Variation der physikalischen oder technischen Parameter, zum Teil durch persönliche Geschicklichkeit der Arbeiter und des Pressenführers und zum Teil durch Preßhilfsmittel.

Preßhilfsmittel haben vielfältige Wirkungen und man stellt demgemäß an sie eine Reihe verschiedener Anforderungen:

a) Schmierende oder gleitendmachende Wirkung, so daß sich das mehlige Futter leichter und mit weniger Energie pressen läßt.

b) Bindewirkung, so daß die kleinen Teilchen besser zusammenbacken. Dabei soll der Preßling zwar abriebfest werden, aber nicht spröde. Wird er spröde und unelastisch, so bricht er beim Transport und bei der Lagerung.

c) Der Geschmack soll nicht beeinträchtigt werden, da die Tiere das Futter sonst nicht annehmen.

d) Das Preßhilfsmittel muß für Tier (und Mensch) physiologisch unbedenklich sein.

e) Das Preßhilfsmittel soll mit allen Futterkomponenten verträglich sein.

f) Es soll schon in geringer Konzentration wirksam sein.

g) Es soll nicht mikrobiell angegriffen werden oder selbst mikrobielle Verunreinigungen in das Futter hineinbringen.

h) Es soll thermisch stabil sein, um die beim Preßvorgang entstehende Wärme zu überstehen.

Es sind nun mehrere Preßhilfsmittel bekannt, die diese Anforderungen erfüllen. So sind nach dem Futtermittelgesetz zugelassen:

1. Ligninsulfonat bis zu 30 g je kg Futter

2. Weißer Ton bis zu 30 g je kg Futter

3. Zelluloseäther
(= Carboxymethylcellulose) bis 3 g je kg Futter.

Ligninsulfonat wird hauptsächlich als Preßhilfsmittel bei Mischfutter verwendet. Es hat den Nachteil, daß je nach Rezeptur zwischen 1,5 und 10% benötigt werden und dies meist noch in Verbindung mit Melasse. Hohe Melassegehalte verbieten jedoch hohe Temperaturen, da Melasse karamelisiert. Ligninsulfonat verdünnt durch die notwendige relativ hohe Konzentration das Futter und setzt dadurch den Nährstoffgehalt herab. Diesen kann man nur durch Verwendung von hochenergetischen Futtermitteln, die aber teurer sind, ausgleichen. Ferner wird die Resorption durch Ballaststoffe wie Ligninsulfonat verlangsamt.

Schließlich enthält Ligninsulfonat immer Schwefeldioxid, welches laxierende Wirkung hervorruft.

Weißer Ton hat ebenfalls den Nachteil, daß er das Futtermittel verdünnt und die Nährstoffkonzentration herabsetzt. Ferner hat er eine geringe Backwirkung. Die Folge ist ein wenig abriebfester Preßling. In Bezug auf die Bindewirkung steht weißer Ton noch hinter Ligninsulfonat.

Zelluloseäther etwa in Form von Carboxymethylcellulose findet wegen des relativ hohen Preises nur in Spezialfuttern Verwendung. Dieser Stoff hat aber auch den technischen Nachteil, hohe Fettanteile im Futter unzureichend zu binden.

Aus mehreren Patentschriften z.B. den US-Patentschriften 3 989 846, 2 687 354, 3 873 733 sowie der tscheschichen Patentschrift 132 313 war der Zusatz von Harnstoffformaldehydharzen zu Futtermitteln schon bekannt. In all diesen Patentschriften war jedoch die Aufgabenstellung und die Lösung anders als beim vorliegenden Problem, nämlich mit geringen Mengen an Zusätzen eine Pelletierung von mehlförmigen Futtermitteln zu erreichen.

Daher bestand unverändert die Aufgabe, ein vorteilhaftes Verfahren zur Herstellung von Futterpellets vorzuschlagen, wobei die genannte Vorliteratur keine Lösungsvorschläge bieten konnte.

Die Aufgabe wurde erfindungsgemäß gelöst durch homogenes Vermischen eines pulverförmigen Harnstoff-Formaldehydharzes, das durch Sprühtrocknen einer Leimlösung hergestellt worden ist und das ein Molverhältnis Harnstoff zu Formaldehyd von 1:1,6 bis 1:2 und einen Gehalt an freiem Formaldehyd von 1 bis 4 Gewichtsprozent aufweist, in Mengen von 0,1 bis 2 Gewichtsprozent, bezogen auf das Futtermittel, mit mehlförmigen Futtermitteln und anschließendes Verpressen zu Strängen. Vorzugsweise wird die Futtermittelmischung vorher erhitzt, insbesondere mit Dampf.

Das erfindungsgemäße Pelletierungsverfahren eignet sich für alle mehligen Einzelfutter und insbesondere Mischfutter.

Mischfutter sind Gemische aus pflanzlichen, tierischen und synthetischen organischen und anorganischen Stoffen, z.B. Mehl, Sojaschrot, Fischmehl, Mineralstoffen wie Monocalciumphosphat, Dicalciumphosphat, Spurenelementen in Form von Magnesiumoxid und Kupfersulfat und Vitaminen wie Vitamin-A-acetat und Vitamin-E-acetat.

Als pulverförmige Harnstoff-Formaldehydharze kommen Harze in Betracht, die in für die Leimherstellung bekannter Weise als ca. 50 prozentige wäßrige Lösung hergestellt werden (Viskosität: 80 bis 120 mPa.sec bei 20°C, Molverhältnis Harnstoff zu Formaldehyd = 1:1,95 bis 1:2,05), die bei 100 bis 170°C zu einem höchstens 2 Gewichtsprozent Wasser enthaltenden Produkt durch Versprühen getrocknet wird. Man verwendet dabei ein Verhältnis Harnstoff zu Formaldehyd von 1:1,6 bis 1:2. Im Gegensatz zu den Anforderungen an einen Holzleim weist dieses Pulver einen relativ hohen Gehalt an freiem Formaldehyd auf von 1 bis 4 Gewichtsprozent, insbesondere 1,4 bis 3 Gewichtsprozent und vorzugsweise 1,6 bis 2,4 Gewichtsprozent. Es hat sich nämlich gezeigt, daß die Abriebfestigkeit der Preßlinge umso höher ist, je höher der Gehalt an freiem Formaldehyd im Harz ist. (Der Gehalt an freiem Formaldehyd wird nach bekannten Methoden z.B. Aufschlämmen des Pulvers in Äthylenglykol und Bestimmung des freien Formaldehyds nach de Jong — De Jong et al, Rec. Trav. Chim. Pays-bas *71*, 643 (1952) — ermittelt.)

Der freie Formaldehyd hat zudem den weiteren Vorteil, daß er von den Proteinen gebunden wird, die damit vor dem vorzeitigen Abbau im Pansen geschützt werden und unabgebaut in den Labmagen und/oder Dünndarm gelangen. Ferner konserviert Formaldehyd das Futter. Der Geschmack wird nicht beeinträchtigt und das Futter behält einen angenehmen Geruch.

Bezüglich der Herstellung der Harze wird im einzelnen auf Ullmann Technische Encyclopädie Bd. 7, Seite 406, 412—415 (4. Aufl. 1976) verwiesen.

Die Harnstoff-Formaldehydharze vermischt man mit den mehligen Futtermitteln in Mengen von 0,1 bis 2 Gewichtsprozent. Dabei tritt eine deutliche Wirkung bei Mengen über 0,1 Gewichtsprozent ein, die zunächst zunimmt und sich bei Mengen über 2 Gewichtsprozent nur noch geringfügig weiter verstärkt. Die obere Grenze der Zusatzmenge ist somit vor allem durch wirtschaftliche Gründe begrenzt. Deshalb werden im allgemeinen Mengen von 0,15 bis 1,5%, vorzugsweise Mengen von 0,2 bis 0,5 Gewichtsprozent angewandt.

Die Vermischung der Harnstoff-Formaldehyharze mit den Futtermitteln geschieht zweckmäßig in den üblichen Mischern, z.B. Schleudermischern, Schneckenmischern, Doppelschneckenmischern, Wirbelmischern, Horizontalmischern, Vertikalmischern, Chargenmischern, Durchlaufmischern, bis eine homogene Verteilung erzielt ist. Dann wird die erhaltene Mischung nach Zugabe von Flüssigkeit und/oder Wasserdampf je nach der gewählten Pelletierungsmethode durch Matrizen zu Pellets gepreßt, die in der gewünschten Länge z.B. zwischen 2 und 50 mm abgeschnitten werden. Bezüglich der Einzelheiten der Preßvorrichtungen und der Pelletierung wird auf "Feed Manufacturing Technology" (American Feed manufactures Association, Feed Production Council) 1970, Verlag: American feed manufactures Association Inc., 53 West Jackson Boulevard, Chicago Illinois 60604, Seiten 96 ff und 385 ff verwiesen.

Mit dem erfindungsgemäßen Verfahren erzielt man bei geringerem Energieaufwand beim Pressen einen geringeren Abrieb, hohe Elastizität und glatte Oberfläche des Preßlings und eine Schutzwirkung gegen Befall durch Schimmel oder Bakterien.

Ferner haben die erfindungsgemäß erhältlichen Presslinge eine gewisse Porosität, so daß die Dichte um 20 bis 25% kleiner als ohne Harzzusatz ist. Zwar wird dadurch der Vorteil des geringeren Packmittelaufwandes und Transportvolumens zum Teil aufgehoben, doch wirkt sich diese Eigenschaft in der Fütterung sehr vorteilhaft aus:

Beim Schweinefutter führt die Volumenvergrößerung dazu, daß sich die Schweine nicht mehr überfressen, da das erhöhte Volumen den Magen eher ausfüllt. Das Futter wird auch besser eingespeichelt, da es beim Kauen in kleinere Teile zerfällt. Beides wirkt sich durch längere Verweilzeit im Darm und bessere Ausnutzung, sowie besseren Voraufschluß durch den Speichel in einer besseren Verdauung aus. Die bessere Futterausnutzung bewirkt eine höhere Futterverwertung. Beim Fischfutter ist die Schwimmfähigkeit verbessert. Die Verunreinigung der Teiche wird dadurch erheblich geringer.

Die vorteilhaften Eigenschaften der pelletierten Futtermittel durch den Zusatz der Harnstoff-Formaldehyd-Kondensat aufgebracht der geringen Mengen der Harze ist überraschend, obgleich die Klebewirkung von Harnstoff-Formaldehydharzen von der Verwendung als Holzleim her wohlbekannt ist. Die Summe der genannten Eigenschaften in Mischfuttern läßt sich nämlich nicht durch die Erfahrungen bei der Anwendung als Holzleim erklären. Hohe Roggenmehl- oder Stärkekleisterzusätze (also Kohlehydrate wie im Futter) beeinflussen nämlich die Klebqualität nachhaltig, die Härtung erfolgt relativ langsam, weswegen man damit hätte rechnen müssen, daß die Preßlinge aneinanderkleben; auch hätte man relativ spröde Preßlinge erwarten sollen.

Gemäß der Offenbarung der DE-OS 19 27 971 wurden auch schon Harnstoff-Formaldehydharze Futtermitteln zugegeben. Demgegenüber unterscheidet sich die vorliegende Erfindung in den Maßnahmen, der Zielsetzung und den Ergebnissen wesentlich. Dort wird ein teilchenförmiges d.h. nicht mehliges Futter zunächst einer Behandlung mit einem Amid unterzogen, das Futter erhitzt und getrocknet, dann ein flüssiges, konzentriertes Harnstoff-Formaldehyd-Kondensat aufgebracht und das Futtermittel pelletiert. In dem einzigen diesbezüglichen Beispiel wird Orangenpulpe nach Behandlung mit Harnstoff mit einem Kondensat umgesetzt, das ein Molverhältnis Formaldehyd zu Harnstoff von 4,6:1 aufweist. Die Menge des Kondensats beträgt 12,5 Gewichtsprozent ist also beträchtlich höher als bei dem erfindungsgemäßen Verfahren.

Beispiel 1

Schweinemast-Alleinfutter

5000 kg Schweinemast-Alleinfutter werden unter Zusatz von 1 Gewichtsprozent pulverförmigem Harnstoff-Formaldehyd-Kondensat zu Pellets verpreßt. Das Schweinefutter hat folgende Zusammensetzung:

| | |
|---|---|
| 15 % | Gerste |
| 9 % | Milokorn |
| 8 % | Weizen |
| 7 % | Mais |
| 25 % | Weizenkleie |
| 3 % | Maiskeimschrot |
| 1,5 % | Malzkeime |
| 10 % | Sojaschrot |
| 2 % | Rapsschrot |
| 10 % | Tapickamehl |
| 0,5 % | Fischmehl |
| 2,5 % | Tiermehl |
| 1 % | Fleischknochenmehl |
| 3 % | Melasse |
| 1 % | Futterfett |
| Rest | Vitamine, Mineralstoffe, Spurenelement |

Die Pellets zeigen eine Härte von 10,44 kg/cm² und einem Abrieb von 1,42%. Die Preßleistung ist unvermindert gegenüber dem Vergleichsversuch ohne Harnstoff-Formaldehydkondensat.

Das Harnstoff-Formaldehydkondensat wird wie folgt hergestellt. Eine in üblicher Weise durch saure Kondensation erhaltene wäßrige Lösung von Harnstoff und Formaldehyd, vorliegend als Harnstoff-Formaldehyd-Kondensationsprodukt mit 50% Feststoffgehalt wird bei 100 bis 170°C einem Sprühtrockner zu einem Pulver eingedampft. Das Molverhältnis von Harnstoff zu Formaldehyd beträgt 1 zu 1,9. Der Wassergehalt liegt bei 3% und nimmt nach 1 Woche auf 2% ab. Das Schüttgewicht beträgt 0,7 kg/l. Die Korngrößenverteilung ist wie folgt:

100 % kleiner als 0,2 mm
90 % kleiner als 0,1 mm
30 % kleiner als 0,05 mm

a) Vergleichversuch

5000 kg Schweinemast-Alleinfuttermischung der oben angegebenen Zusammensetzung werden ohne Zusatz von Harnstoff-Formaldehyd-Kondensat verpreßt. Die Pellets weisen eine Härte von nur 8,34 kg/cm² und einen Abrieb von 3,40% entsprechend dem 2,4-fachen der erfindungsgemäß hergestellten Pellets auf.

Der Abrieb wird folgendermaßen bestimmt:

Die Pellets werden in einem Drehkasten gefüllt, der mit 50 Umdrehungen pro Minute 500 Umdrehungen ausführt. Anschließend werden die Pellets gesiebt. Der Siebdurchgang, das Material mit einem kleineren Durchmesser als der eines ganzen Pellets, wird als Abrieb bezeichnet.

### Beispiel 2

Karpfenfutter

5000 kg Karpfenfutter werden unter Zusatz von 1% pulverförmigem Harnstoff-Formaldehyd-Kondensat von derselben Zusammensetzung wie in Beispiel 1 beschrieben zu Pellets gepreßt. Das Karpfenfutter hat die Zusammensetzung:

| | | |
|---|---|---|
| 13 | % | Gerste |
| 9 | % | Milokorn |
| 8 | % | Weizen |
| 12 | % | Mais |
| 20,5 | % | Weizenkleie |
| 3 | % | Maiskeimschrot |
| 1,5 | % | Malzkeime |
| 10 | % | Sojaschrot |
| 2 | % | Rapsschrot |
| 5 | % | Tapiokamehl |
| 5 | % | Fischmehl |
| 2,5 | % | Tiermehl |
| 3 | % | Fleischknochenmehl |
| 3 | % | Melasse |
| 1 | % | Futterfette |
| Rest | | Vitamine, Mineralstoffe, Spurenelemente |

Die Pellets haben eine Härte von 10,1 kg/cm² und einen Abrieb von 1,51%. Die Pellets hatten nach 12 Stunden Verbleiben unter Wasser noch ihre Form und sind nicht aufgelöst. Das ist überraschend, da Harnstoff-Formaldehydleim wasserlöslich ist und eine Verleimungswirkung in dieser Konzentration unbekannt ist.

a) Vergleichsversuch

5000 kg Karpfenfutter von der oben angegebenen Zusammensetzung werden ohne Zusatz von Harnstoff-Formaldehyd-Kondensat gepreßt. Die Preßlinge haben eine Härte von nur 8,2 kg/cm² und weisen 3,42% Abrieb auf. Im Wasser lösen sie sich nach 4 Minuten völlig auf. Die Bestandteile verteilen sich im Fischbassin.

### Beispiel 3

Karpfen-Alleinfutter

1000 kg Karpfenfutter der Zusammensetzung

| | | |
|---|---|---|
| 32 | % | Mais |
| 25,68 | % | Sojaschrot |
| 12 | % | Weizen |
| 5 | % | Hafer |
| 5 | % | Milokorn |
| 5 | % | Fischmehl |
| 3,50 | % | Weizennachmehl |
| 2,5 | % | Futterfett |
| 2,0 | % | phosphorsaurer Futterkalk |
| 1,5 | % | kohlensaurer Futterkalk |
| 1,0 | % | Fleischknochenmehl |
| 1,0 | % | Hefe getrocknet |

| | | |
|---|---|---|
| 1,0 | % | Biertreber getrocknet |
| 1,0 | % | Zuckerrübenschnitzel |
| 0,7 | % | Vitamin-Vormischung |
| 0,62 | % | Coccidiostatika-Vormischung |
| 0,20 | % | Spurenelemente-Vormischung |
| 0,20 | % | antibiotische Vormischung |
| 0,10 | % | Viehsalz jodiert |

werden mit 5 kg pulverförmigem Formaldehyd-Kondensat (= 0,5%) (hergestellt gemäß Beispiel 1) gemischt und zu Pellets gepreßt. Die Pellets bleiben 3 Tage im Wasser stabil und zerfallen dann. 10 Karpfen, deren Gewicht zu Versuchsbeginn zwischen 10 und 20 g liegt, werden 61 Tage mit dieser Mischung gefüttert. Als Gefäß dient ein Versuchsaquarium mit den Abmessungen 60 × 30 cm, Höhe 40 cm. Das Aquarium enthält 60 l chlorfreies Leitungswasser. Das Wasser wird im Kreislauf geführt, wobei Kohlefilter eingeschaltet sind. Die Temperatur beträgt 20 bis 22°C. Die 10 Karpfen erhalten pro Tag 3 g des Futters. Die Gewichtszunahme pro Tier und Tag beträgt 0,46 g.

Ein analog durchgeführter Versuch, jedoch ohne Zusatz von Formaldehyd-Harnstoff-Kondensat, ergibt Pellets, die nur 1 bis 2 Tage stabil bleiben. Die Gewichtszunahme pro Tier und tag beträgt, 0,28 g.

Ein analog durchgeführter Versuch, jedoch mit 2% Zusatz an Formaldehyd-Harnstoff-Kondensat ergibt Pellets, die 3 bis 10 Tage stabil bleiben. Die Gewichtszunahme beträgt 0,31 g pro Tier und Tag.

### Beispiel 4

Schweinemast-Alleinfutter

4000 g Schweinemastfutter der Zusammensetzung

| | | |
|---|---|---|
| 15 | % | Mais |
| 20 | % | Gerste |
| 10 | % | Tapioka |
| 10,5 | % | Soja |
| 8 | % | Weizennachmehl |
| 4,5 | % | Weizenvollmehl |
| 10 | % | Webenerzeugnisse der Maisöl-Gewinnung |
| 3 | % | Rapsschrot |
| 7 | % | Maiskeime |
| 3 | % | Trockenschnitzel |
| 3 | % | Melasse |
| 2 | % | Fleischknochenmehl |
| 0,5 | % | Fischmehl |
| 1,5 | % | Fett |
| Rest | | Vitamine, Spurenelemente |

werden mit 0,25% Formaldehyd-Harnstoff-Kondensatpulver gemischt und zu Pellets gepreßt. Die Temperatur am Presseneingang beträgt 74°C, am Pressenausgang 80°C, Kühlertemperatur 16°C. Der Wassergehalt der Mischung nach dem Kühlen (infolge Dampfzusatzes) beträgt 14,6%. Der Abrieb wurde zu 4% gefunden.

Vergleichsversuch

In einem analog durchgeführten Ansatz wird soviel Ligninsulfonat zugegeben (durch Probieren) bis der gleiche Abriebwert erreicht ist. Der Gehalt an Ligninsulfonat beträgt 1,6% d.h. das 6-fache des Wertes für das Formaldehyd-Harnstoff-Kondensat.

**Patentansprüche**

1. Verfahren zur Herstellung von Preßlingen von Futtermitteln und Harnstoff-Formaldehydharzen durch Torckenmischen und Verpressen *dadurch gekennzeichnet,* daß man ein pulverförmiges Harnstoff-Formaldehydharz, das durch Sprühtrockeneiner Leimlösung hergestellt worden ist und das ein Molverhältnis Harnstoff zu Formaldehyd von 1:1,6 bis 1:2 und einen Gehalt an freiem Formaldehyd von 1 bis 4 Gewichtsprozent aufweist, in Mengen von 0,1 bis 2 Gewichtsprozent, bezogen auf das Futtermittel, mit mehlförmigen Futtermitteln homogen vermischt und anschließend verpreßt.

2. Verfahren gemäß Anspruch 1, *dadurch gekennzeichnet,* daß man 0,15 bis 1,5 Gewichtsprozent des Harnstoff-Formaldehydharzes zusetzt.

**Claims**

1. A process for the manufacture of pellets of animal feeds and urea-formaldehyde resins by dry mixing and pelletizing, *characterized in that* a pulverulent urea-formaldehyde resin which has been prepared by spray-drying a glue solution and which has a molar ratio of urea to formaldehyde of from 1:1.6 to 1:2 and a content of free formaldehyde of 1 to 4% by weight, based on the animal feed, is homogeneously mixed with the mealy animal feed and then pelletized.

2. A process as claimed in claim 1, *characterized in that* 0.15 to 1.5% by weight of the urea-formaldehyde resin is added.

**Revendications**

1. Procédé de préparation de produits moulés à partir d'aliments pour le bétail et de résines d'urée-formaldéhyde par mélange à sec et compression, caractérisé en ce que l'on mélange avec des farines alimentaires pour le bétail une résine pulvérulente urée-formaldéhyde, qui a été préparée par séchage par atomisation d'une solution de colle et qui présente un rapport molaire urée/formaldéhyde de 1:1,6 à 1:2 et une teneur en formaldéhyde libre de 1 à 4% en poids, en quantité de 0,1 à 2% du poids de l'aliment pour le bétail, jusqu'à homogénéité, après quoi on comprime.

2. Procédé selon la revendication 1, caractérisé en ce que l'on ajoute de 0,15 à 1,5% en poids de la résine urée-formaldéhyde.